# FASCICULE DE BREVET EUROPEEN

(11) **EP 1 203 431 B1**
(45) Date de publication et mention de la délivrance du brevet: **10.03.2004**
(21) Numéro de dépôt: 01954081.4
(22) Date de dépôt: 12.07.2001
(51) Int. Cl.: H02G 15/04, H01R 13/59

(54) **DISPOSITIF DE RETENUE AXIALE D'UN L MENT CYLINDRIQUE ET PLUS PARTICULI REMENT UN C BLE**
VORRICHTUNG ZUM AXIALEN FESTHALTEN EINES ZYLINDERFÖRMIGEN ELEMENTS, INSBESONDERE EINES KABELS
DEVICE FOR AXIALLY RETAINING A CYLINDRICAL ELEMENT AND MORE PARTICULARLY A CABLE

(30) Priorité: 21.07.2000 FR 0009608
(43) Date de publication de la demande: 08.05.2002
(73) Titulaire: Société d'Exploitation des Procédés Maréchal (SEPM), société anonyme, F-94417 Saint Maurice Cédex (FR)
(72) Inventeur: CRESTIN, Joseph, F-92170 Vanves (FR); CORDIER, Gilles, F-94340 Joinville le Pont (FR)
(74) Mandataire: Chambon, Gérard
(86) Numéro de dépôt international: PCT/FR2001/002248
(87) Numéro de publication internationale: WO 2002/009250

(56) Documents cités:
- DE-C- 19 738 517
- US-A- 4 145 075
- US-A- 5 048 872
- US-A- 5 763 833

## Description

L'invention concerne un dispositif de retenue axiale d'un élément cylindrique et plus particulièrement un câble.

Pour fixer un élément cylindrique dans un autre élément, comme par exemple, un câble électrique dans la poignée d'une fiche ou d'une prise de courant, ou encore par exemple une conduite, un tube ou un tuyau dans un appareil ou un accessoire, il est connu d'utiliser des dispositifs qui retiennent ledit élément cylindrique à l'encontre des efforts de traction.

A cet effet, on connaît un dispositif de retenue axiale comprenant un dispositif de retenue axiale d'un élément cylindrique et plus particulièrement un câble, comprenant une douille qui est filetée extérieurement et qui est prolongée dans le sens axial par des lamelles de serrage, et un écrou de recouvrement comportant intérieurement une surface de pression rétrécie destinée à agir sur les extrémités des lamelles de serrage de la douille et à les déformer radialement vers l'élément cylindrique préalablement introduit dans ladite douille après avoir traversé ledit écrou.

Ce type de dispositif est par exemple décrit dans le brevet Français 2358766 ou encore le brevet Européen 0381980.

Dans le brevet Français précité, le dispositif selon le préambule de la revendication 1 comporte, en outre, une garniture d'étanchéité et constitue donc en même temps un presse-étoupe ou presse-garniture.

Dans ce dispositif connu, la garniture se déforme en tronc de cône et l'adhésion sur le câble s'effectue sur une longueur limitée.

En outre, la déformation de la garniture n'est pas bien contenue côté intérieur et chaque dispositif ne peut concerner qu'un nombre restreint d'éléments à fixer, dans une plage de diamètres relativement réduite.

Enfin, il ne peut pas y avoir dans un tel dispositif, un ancrage des lamelles dans l'élément à retenir puisqu'une traction de ce dernier a tendance à écarter lesdites lamelles.

L'invention permet entre autres d'améliorer les performances de résistance à la traction de ce type de dispositif notamment pour répondre aux normes antidéflagrantes dans le domaine des appareils électriques.

A cet effet, un dispositif selon l'invention du type précité est notamment remarquable en ce qu'il comporte en outre un manchon également pourvu de lamelles de serrage et dont le diamètre extérieur est au plus égal au diamètre intérieur de la douille dans laquelle ledit manchon est destiné à s'introduire en commençant par lesdites lamelles dont il est pourvu, ladite douille étant de plus pourvue intérieurement d'une surface de pression rétrécie, destinée à agir sur les lamelles de serrage du manchon.

Selon un mode de réalisation, la surface de pression de la douille et le manchon sont dimensionnés pour que les lamelles dudit manchon viennent s'ancrer dans l'élément cylindrique au cours du vissage de l'écrou.

Pour assurer une étanchéité, l'invention prévoit un mode de réalisation qui est pourvu d'une garniture d'étanchéité tubulaire destinée à s'intercaler en position finale entre l'élément cylindrique, le manchon et les lamelles de la douille.

Dans ce cas par exemple, la garniture d'étanchéité se présente en deux parties de diamètres extérieurs différents, le plus petit diamètre extérieur correspondant sensiblement au diamètre intérieur du manchon et le plus grand diamètre correspondant sensiblement au diamètre intérieur de la douille.

Un dispositif selon l'invention qui reste compact et qui ne nécessite qu'une seule opération de vissage permet aussi d'assurer avec un seul dispositif l'amarrage et l'étanchéité de divers câbles dans une plage importante de diamètres ce qui simplifie le choix de l'utilisateur, limite les problèmes de stockage et augmente les volumes de fabrication en diminuant ainsi les prix de revient.

L'invention sera bien comprise et d'autres particularités apparaîtront à la lecture de la description qui va suivre et qui se réfère aux dessins annexés dans lesquels :
- La figure 1 est une vue éclatée d'un dispositif selon l'invention.
- La figure 2 est une coupe axiale des divers éléments à assembler.
- Les figures 3, 4 et 5 sont des coupes axiales du dispositif des figures 1 et 2, respectivement avant le vissage de l'écrou, en début de vissage et en fin de vissage.
- La figure 6 est une vue qui correspond à la figure 5 selon un autre mode de réalisation très légèrement différent.

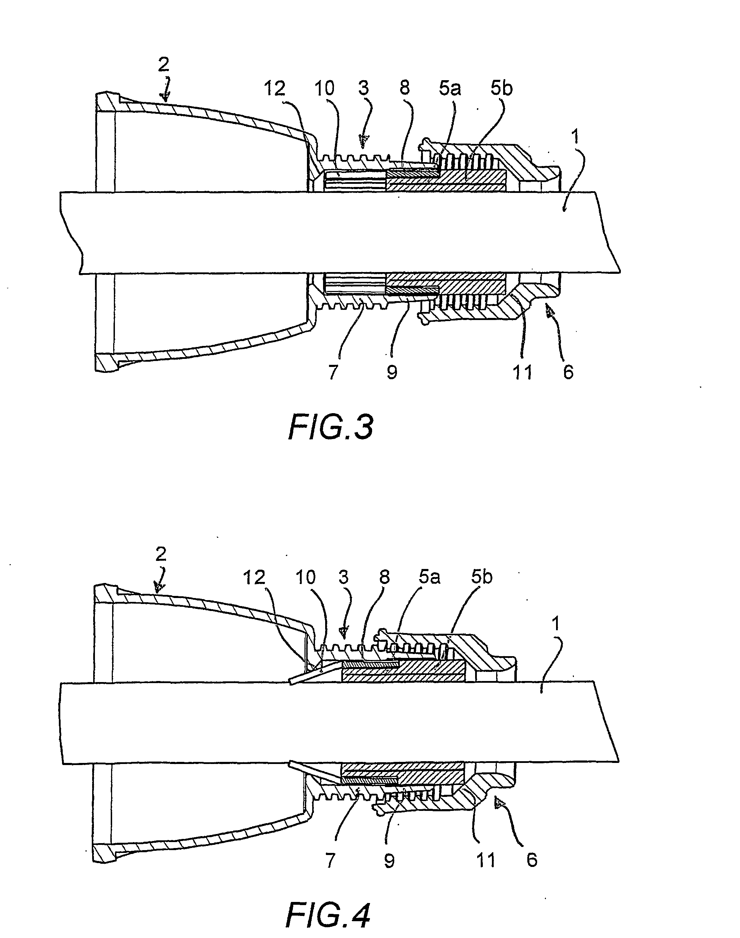

Les figures représentent un dispositif selon l'invention destiné à fixer dans l'exemple représenté un câble électrique 1 (figures 3 à 6) dans une poignée 2 d'un moyen de connexion électrique (poignée de fiche ou de prise mobile ou de prolongateur ou de connecteur etc.).

Le dispositif selon l'invention comporte une douille 3 solidaire de la poignée 2, un manchon 4, une garniture d'étanchéité 5 en caoutchouc et un écrou 6 sous forme de bague.

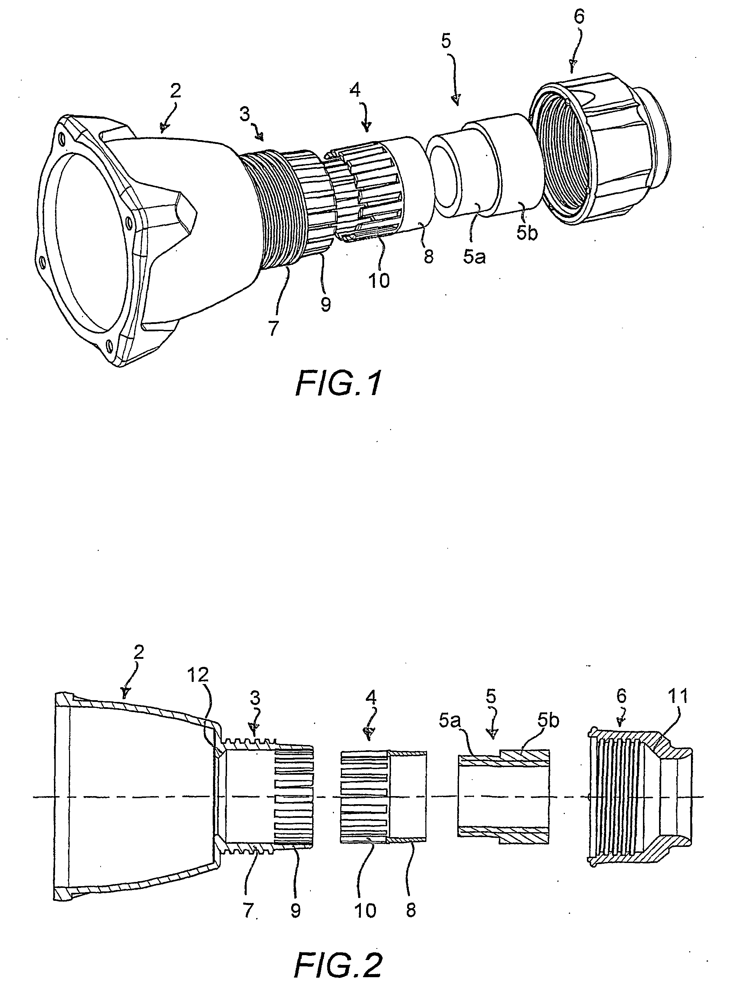

Comme le montrent bien les dessins, la douille 3 et le manchon 4 sont munis d'une base 7 et respectivement 8 prolongée par des lamelles respectivement 9 et 10 qui font saillies vers l'extérieur dans le sens axial, les lamelles 10 du manchon 4 étant positionnées pour le montage, comme il sera expliqué ci-après, vers les lamelles 9 de la douille 3 (figures 1 et 2). La base 7 de la douille 3 est en outre pourvue d'un filetage extérieur comme le montrent les dessins, destiné à coopérer avec le filetage intérieur de l'écrou 6.

L'écrou 6 présente à la base de son filetage une surface intérieure de pression 11 rétrécie par exemple de forme tronconique dont la fonction sera précisée ci-après.

De même, la base de la douille 3 est, du côté opposé aux lamelles 9, pourvue d'une surface intérieure de pression 12 rétrécie.

Comme le montrent bien les dessins, la garniture 5 présente deux parties 5a et 5b en gradins de diamètres extérieurs différents.

Le plus petit diamètre extérieur (partie 5a) de la garniture 5 correspond sensiblement au diamètre intérieur de la base 8 du manchon 4 et le plus grand diamètre (partie 5b) correspond sensiblement au diamètre intérieur des lamelles 9 de la douille 3 avant déformation, tandis que le diamètre extérieur dudit manchon 4 est sensiblement égal au diamètre intérieur de la douille 3.

Les dessins montrent clairement la manière d'assembler entre eux les divers éléments du dispositif.

Les éléments sont disposés initialement comme le montrent les figures 1 et 2.

A partir de cette disposition, on introduit le manchon 4 par ses lamelles dans la douille 3, et après ou avant, on introduit la partie 5a de la garniture 5 dans la base 8 du manchon 4 et on présente l'écrou 6 de recouvrement sur les lamelles 9 de la douille 3 afin de se retrouver dans la position de la figure 3.

Avant ou après ce premier assemblage, le câble 1 est évidemment introduit à travers tous les éléments (2, 3, 4, 5 et 6).

A partir de le position de la figure 3, on pousse l'écrou 6 qui vient lui-même pousser l'ensemble garniture 5 et manchon 4 jusqu'à ce que les lamelles 10 du manchon 4 soient sollicitées radialement par la surface de pression 12 de la douille 3 pour se déformer et venir se resserrer sur le câble 1 comme le montre la figure 4.

On effectue ensuite le vissage de l'écrou 6 ce qui accentue la déformation des lamelles 10. En poursuivant ledit vissage de l'écrou 6, ce sont les lamelles 9 de la douille 3 qui se resserrent radialement sur la garniture 5 en se déformant sous l'effet de la surface de pression 11 dudit écrou 6.

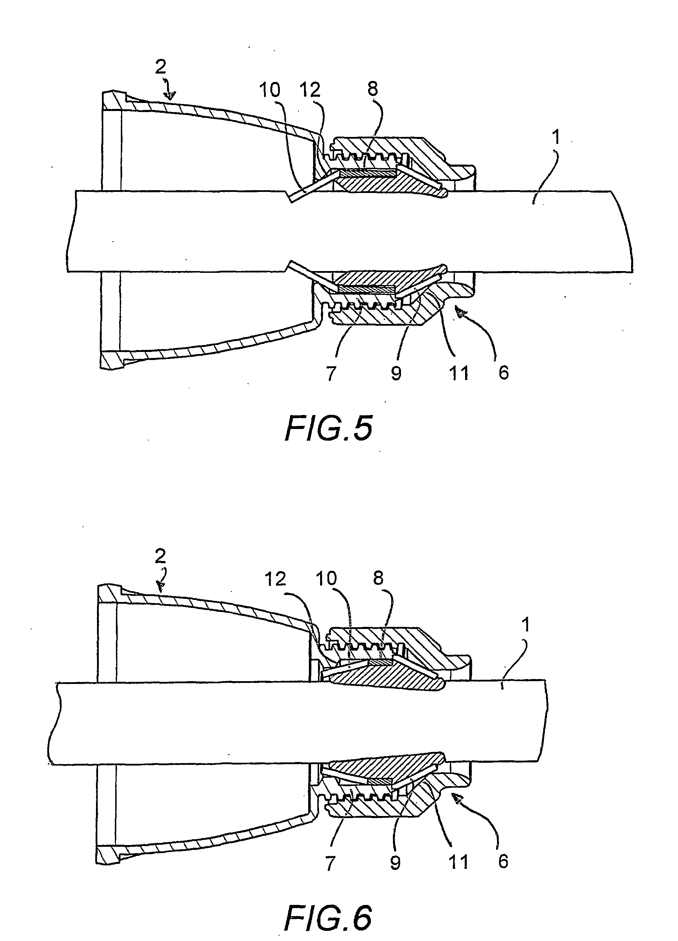

Dans le mode de réalisation des figures 1 à 5, la longueur du manchon 4 et la surface de pression 12 de la douille 3 sont telles que les lamelles 10 dudit manchon 4 viennent s'ancrer en fin de vissage dans le câble 1 comme le montre la figure 5.

Dans le mode de réalisation de la figure 6, la base 8 du manchon 4 est moins longue axialement et/ou les lamelles 10 sont plus courtes de même que la surface de pression 12, de telle sorte que dans ce mode de réalisation, lesdites lamelles 10 ne viennent pas s'ancrer dans le câble 1. Etant donné que les différences du manchon et de la surface 12 de la douille 3 du dispositif de la figure 6, par rapport au manchon 4 et à la douille 3 des figures 1 à 5, sont essentiellement dimensionnelles, on a conservé sur lesdites figures les mêmes références.

Sur les figures 5 et 6, on peut constater que la garniture 5 est parfaitement comprimée par le manchon 4 et les lamelles 9 de la douille 3, et elle est en outre parfaitement maintenue entre ses deux extrémités par les lamelles 9 et 10 de la douille 3 et respectivement du manchon 4.

Par rapport à l'art connu, l'invention permet une plus grande longueur de contact entre la garniture 5 et le câble 1 ainsi qu'un volume de garniture déformée plus grand, ce qui accroît la fiabilité de l'étanchéité et de la rétention, en assurant ainsi une plus grande réserve d'élasticité pour compenser les relaxations des pièces plastiques destinées à comprimer la garniture.

Les lamelles de la douille 3 agissent sur la garniture 5 et le câble1 de façon classique tandis que les lamelles 10 du manchon 4 agissent en sens inverse avec en outre un ancrage ou non dans le câble 1 (figures 5 et respectivement 6).

On comprend en outre que dans le mode de réalisation des figures 1 à 5, une traction sur le câble accentue l'ancrage du manchon 4, ledit ancrage étant ainsi autobloquant.

Si le mode de réalisation concerne plus particulièrement un câble électrique, il pourrait bien sûr s'agir comme déjà dit de tout élément cylindrique.

## Revendications

1. Dispositif de retenue axiale d'un élément cylindrique et plus particulièrement un câble (1), comprenant une douille (3) qui est filetée extérieurement et qui est prolongée dans le sens axiale par des lamelles de serrage (9), un écrou (6) de recouvrement comportant intérieurement une surface de pression (11) rétrécie destinée à agir sur les extrémités des lamelles de serrage (9) de la douille (3) et à les déformer radialement vers l'élément cylindrique (1) préalablement introduit dans ladite douille (3) après avoir traversé ledit écrou (6), et une garniture d'étanchéité tubulaire (5) destinée à s'intercaler en position finale et au moins en partie entre l'élément cylindrique (1) et les lamelles (9) de la douille (3), dispositif **caractérisé en ce qu'**il comporte en outre un manchon (4) également pourvu de lamelles de serrage (10) et dont le diamètre extérieur est au plus égal au diamètre intérieur de la douille (3) dans laquelle ledit manchon (4) est destiné à s'introduire en commençant par lesdites lamelles (10) dont il est pourvu, ladite douille (3) étant de plus pourvue intérieurement d'une surface de pression (12) rétrécie, destinée à agir sur les lamelles de serrage (10) du manchon (4).

2. Dispositif selon la revendication 1 **caractérisé en ce que** le rétrécissement de la surface de pression (12) de la douille (3) et la longueur du manchon (4) sont dimensionnés pour que les lamelles (10) dudit manchon se déforment suffisamment en se resserrant sur l'élément cylindrique (1) pour venir s'ancrer dans celui-ci, au cours de la mise en place et du vissage de l'écrou (6).

3. Dispositif selon l'une des revendications 1 et 2, **caractérisé en ce que** la garniture d'étanchéité tubulaire (5) s'intercale en plus en position finale et en partie, entre l'élément cylindrique (1) et le manchon (4).

4. Dispositif selon la revendication 3 **caractérisé en ce que** la garniture d'étanchéité (5) se présente en deux parties (5a, 5b) de diamètres extérieurs différents, le plus petit diamètre extérieur correspondant sensiblement au diamètre intérieur du manchon (4) et le plus grand diamètre correspondant sensiblement au diamètre intérieur de la douille (3).

## Claims

1. Device for axial maintenance of a cylindrical element and more particularly of a cable (1), comprising a coupling bushing (3) which is threaded externally and which is prolonged in the axial direction by tightening nut strips (9), a covering nut (6) comprising internally a reduced pressure surface (11) intended to act on the ends of the nut strips (9) of the coupling bushing (3) and to deform them radially towards the cylindrical element (1) previously introduced into said coupling bushing (3) after crossing said nut (6), and a tubular packing seal (5) intended to be inserted in the final position and at least in part between the cylindrical element (1) and the strips (9) of the coupling bushing (3), the device **characterised in that** it further comprises a sleeve (4) also provided with nut strips (10) and whose external diameter is at most equal to the internal diameter of the coupling bushing (3) in which said sleeve (4) is intended to be introduced beginning by said strips (10) with which it is provided, said coupling bushing (3) being further provided internally with a reduced pressure surface (12), intended to act on the nut strips (10) of the sleeve (4).

2. Device according to claim 1 **characterised in that** the reducing of the pressure surface (12) of the coupling bushing (3) and the length of the sleeve (4) have dimensions such that the strips (10) of said sleeve are deformed enough and thightened onto cylindrical element (1) to be anchored in this one during the positioning and the screwing of the nut (6).

3. Device according to either one or the other of claims 1 and 2 **characterised in that** the tubular packing seal (5) is inserted in part also, between the cylindrical element (1) and the sleeve (4).

4. Device according to claim 3 **characterised in that** the packing seal (5) is in two parts (5a, 5b) with different external diameters, the smallest external diameter corresponding substantially to the internal diameter of the sleeve (4) and the biggest diameter corresponding substantially to the internal diameter of the coupling bushing (3).

## Patentansprüche

1. Vorrichtung zum axialen Festhalten eines zylinderförmigen Elements, insbesondere eines Kabels (1), umfassend eine außen mit Gewinde versehene Hülse (3), die in Achsenrichtung durch Klemmlamellen (9) verlängert ist, eine innen eine sich verengende Pressfläche (11) umfassende Abdeckmutter (6), die auf die Enden der Klemmlamellen (9) der Hülse (3) wirken und diese radial gegen das zuvor und, nachdem es die Mutter (6) durchdrungen hat, in die Hülse (3) eingeführte zylinderförmige Element (1) verformen soll, und eine rohrförmige Dichtung (5), die sich in Endstellung und mindestens teilweise zwischen das zylinderförmige Element (1) und die Lamellen (9) der Hülse (3) einfügen soll, **dadurch gekennzeichnet, dass** die Vorrichtung außerdem eine ebenfalls mit Klemmlamellen (10) versehene Manschette (4) aufweist, deren Außendurchmesser höchstens gleich dem Innendurchmesser der Hülse (3) ist, in welche diese Manschette (4), beginnend mit den Lamellen (10), mit denen sie versehen ist, eingesetzt werden soll, wobei die Hülse (3) zudem innen mit einer sich verengenden Pressfläche (12) versehen ist, die auf die Klemmlamellen (10) der Manschette (4) einwirken soll.

2. Vorrichtung nach Anspruch 1, **dadurch gekennzeichnet, dass** die Verengung der Pressfläche (12) der Hülse (3) und die Länge der Manschette (4) so bemessen sind, dass während des Anbringens und Aufschraubens der Mutter (6) die Lamellen (10) der Manschette sich beim Festklemmen auf dem zylinderförmigen Element (1) hinreichend verformen, um sich in diesem zu verankern.

3. Vorrichtung nach einem der Ansprüche 1 und 2, **dadurch gekennzeichnet, dass** die rohrförmige Dichtung (5) sich in Endstellung und teilweise zwischen das zylinderförmige Element (1) und die Manschette (4) einfügt.

4. Vorrichtung nach Anspruch 3, **dadurch gekennzeichnet, dass** die Dichtung (5) aus zwei Abschnitten (5a, 5b) verschiedenen Außendurchmessers besteht, wobei der kleinere Außendurchmesser im wesentlichen dem Innendurchmesser der Manschette (4) und der größere Durchmesser im wesentlichen dem Innendurchmesser der Hülse (3) entspricht.
